# EUROPEAN PATENT SPECIFICATION

(11) **EP 1 722 548 B1**
(45) Date of publication and mention of the grant of the patent: **13.05.2009**
(21) Application number: 06014712.1
(22) Date of filing: 17.03.1995
(51) Int. Cl.: H04N 1/44

(54) **Method for data copyright control**
Verfahren zur Steuerung des Datenurheberrechtes
Procédé de contrôle du droit d'auteur de données

(30) Priority: 01.04.1994 JP 6488994
(43) Date of publication of application: 15.11.2006
(62) Divisional of application: 01111936.9
(73) Proprietor: Intarsia Software LLC, Las Vegas, Nevada 89119 (US)
(72) Inventor: Momiki, Shunichi, Higashimurayama-shi Tokyo (JP); Saito, Makato, Tama-shi Tokyo (JP)
(74) Representative: Heselberger, Johannes

(56) References cited:
- EP-A- 0 398 645
- EP-A- 0 581 227
- EP-A- 0 590 763
- EP-A2- 0 561 685
- "Encryption of information to be recorded so as to prevent unauthorised playback" RESEARCH DISCLOSURE, no. 335, March 1992 (1992-03), page 219, XP000301128 EMSWORTH GB

## Description

### BACKGROUND OF THE INVENTION

### (Field of the Invention)

The present invention relates to a method for controlling copyright on utilization, storage, copying, edit and transfer of digital data, and in particular, to an application of the method to a multi-media system.

### (Prior Art)

In the information-oriented society of today, a database system is being propagated, in which it is possible to use various types of data, stored independently by each computer in the past, by connecting the computers by communication lines.

In such a database system, the information handled so far has been classical type coded information, which can be processed by computer and contains relatively few amount of information and monochrome binary data such as facsimile information at the most, and it is not possible to handle the data containing relatively large amount of information such as natural picture or animation.

With rapid progress of digital processing technique for various types of electric signals, a technique for digital processing of picture signals other than binary data, handled only as analog signals in the past, is under development.

By digitizing the picture signal, it becomes possible to handle picture signal such as television signal by computer, and attention is now focused on "multi-media system", which can simultaneously handle the data processed by computers and also digitized picture data, as a technique of the future.

Because the picture data contains overwhelmingly large amount of information compared with character data and audio data, it is difficult to store, transfer or process by computer.

For this reason, it has been designed to compress and expand these picture data, and several standards for compression/expansion of picture data have been prepared. Among them, the following standards have been established as common standards: JPEG (Joint Photographic image coding Experts Group) standards for still picture, H. 261 standards for television conference, MPEG1 (Moving Picture image coding Experts Group 1) standards for picture accumulation, and MPEG2 standards to cope with the current television broadcasting and high definition television broadcasting.

By these new techniques, it is now possible to transmit digital picture data at real time.

In analog data, which have been widely used in the past, the control of copyright occurring in these processings did not become an important issue because quality of these analog data is deteriorated each time when these are stored, copied, edited or transferred. However, quality deterioration of digital data does not occur even when these are repeatedly stored, copied, fabricated or transferred, and the management and control of copyright occurring in the processings are an important problem.

Up to present, there has been no adequate method for management and control of copyright for digital data. It has been merely managed and controlled by copyright law or by contracts. In the copyright law, merely compensation for digital type sound and picture recording devices have been prescribed.

In the use of database, it is possible not only to refer to the content thereof but also effectively utilize the obtained data by storing, copying or editing, and also to transfer the edited data to other persons or to the database and to register as a new data.

In the conventional type database system, only character data have been handled, while, in multi-media system, sound data and picture data, which are originally analog data, are digitized and used as database in addition to the data such as characters used as database.

Under such circumstances, it is an important problem how to handle copyright of the data, which have been as the database. However, there has been no means for copyright management and control, in particular, on copying, edit, transfer, etc.

A system for executing copyright control by obtaining a permit key from a key control center via public telephone line for using encrypted data has been disclosed in Japanese Patent Application 4-199942 (GB-9314848.4, DE-P4323569.7, and FR-9309213) and Japanese Patent Application 4-289074 (GB-9321742.0, DE-P4335835.7, and FR-9312725) of the present inventors, and a device for this purpose has been disclosed in the Japanese Patent Application 4-276941 (GB-9321202.5, DE-P4334931. 5, and FR-9312285).

From document EP 0 561 685 A2 an electronic data protection system, in particular a software decryption system is known. This document discloses providing a software storage medium from a vendor to a user. The software storage medium includes permission information and encrypted software. The user computer decrypts the permission information and the encrypted software.

### SUMMARY OF THE INVENTION

It is an object of the present invention to provide a method for controlling copyright in display (including the process to sound), storage, copying, edit and transfer of digital data in a database system including real time transmission of digital picture by developing the inventions of the prior applications further.

For the control of copyright, it is essential in the database system, to which the present invention is applied, to transmit one or more, when necessary, among copyright information, copyright control message and a program for controlling copyright, in addition to a key which allows to use to users who wishe to use encrypted data.

The copyright control message is displayed on a screen and advises or warns the user in case the data are being utilized other than the conditions of user's request or permission. The copyright control program watches and controls in order that the data are not utilized beyond the conditions of the user's request or the permission.

The copyright control program, the copyright information and the copyright control message are supplied together with a permit key in some cases, or they are supplied together with data in some other cases. Or, a part of them is supplied together with the permit key, and other part is suppied with the data.

For the data, the permit key, the copyright control message, the copyright information and the copyright control program, there are the following three cases: a case where these are transmitted with encrypted, and upon using, the encryption is decrypted, a case where they are transmitted with encrypted and remain in encrypted except being decrypted only when they are displayed, and a case where they are not encrypted at all.

### BRIEF DESCRIPTION OF THE DRAWINGS

Fig. 1A and Fig. 1B each represents examples of display pictures of messages of the present invention;
Fig. 2A and Fig. 2B each represents a drawing for showing television signals; and
Fig. 3A to Fig. 3J each represents concept of the present invention.

### DETAILED DESCRIPTION OF THE PREFERRED EMBODIMENTS

In the following, description will be given on embodiments of the present invention.

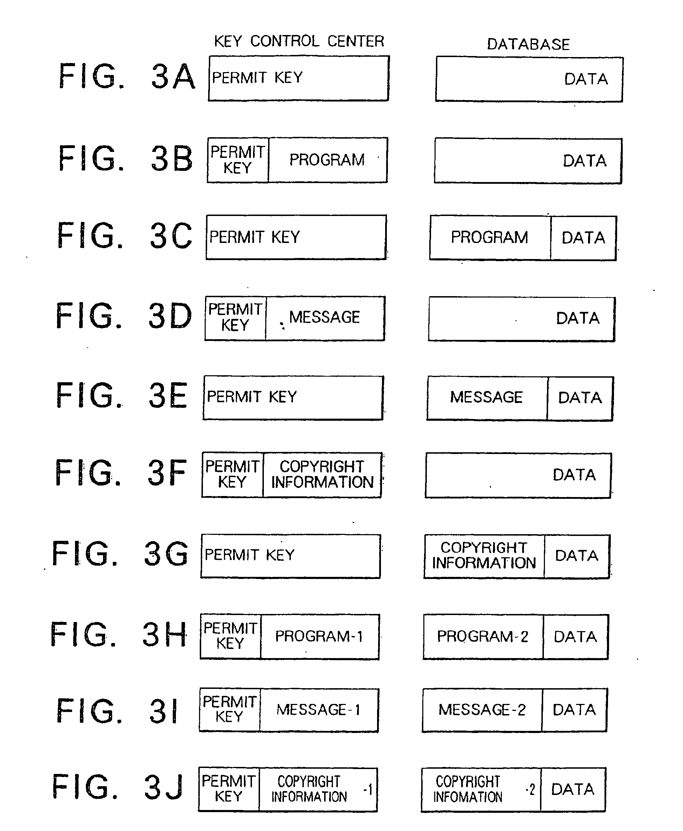

In the prior patent applications mentioned above, it is described under the assumption that a permit key obtaining route is different from a data obtaining route as shown in Fig. 3A, and the permit key is obtained from a key control center via public telephone line. However, if a charging method is determined, it is possible to obtain the permit key via a communication system, through which the database is supplied.

In the system of the prior patent applications, it is assumed that the permit key for secondary exploitation is used for distribution of the data for secondary exploitation, and secondary exploitation of storage, copying, edit, transfer, etc. of data is not included in the assumption. Also, it is assumed that the data is distributed only inside LAN, to which the users belong, and distribution to outside is not assumed. Therefore, this system is not adequate to cope with the secondary exploitation unless the users are conscious in esteeming the copyright.

To cope with various forms of the secondary exploitation as described above, a plurality of the permit keys are prepared to match each form of use, and no utilization is possible unless there is a permit key suitable for the desired form of use.

As the forms of use of database, there are display, storage, copying, edit, transfer, etc. Simply speaking, the permit keys suitable for these forms of use should be prepared.

However, in case it is desired to execute several forms of use at the same time, it is necessary to obtain a plurality of permit keys. If failing to obtain the permit keys, the desired form of use may not be executed.

To avoid such situations, a permit key can be used, which makes it possible to execute several forms of use, for example, permit keys, which are hierarchical and an upper-level key also fulfills the function of a lower-level key.

For example, from lower-level to upper-level is defined as display < storage < copying < edit < transfer. By the display permit key, only display can be executed. Display and storage can be executed by the storage permit key. Display, storage and copying can be executed by the copying permit key. Display, storage, copying and edit can be executed by the edit permit key, and display, storage, copying, editand transfer can be executed by the transfer permit key.

In the prior patent application, i.e. GB 2 304 012 A, the present inventors have proposed a system, in which a plurality of encrypted data, each of which is encrypted by a plurality of different crypt keys, are recorded as encrypted, and data are decrypted when uing, i.e. a system where storage permit key is used as the lowest level key.

By applying this system, it is possible to set from lower-level to upper-level in the order of storage < copying <transfer < display < edit. Specifically, it is set in such manner that storage can be executed by a storage permit key, storage and copying can be executed by a copying permit key, storage, copying and transfer can be executed by a transfer permit key, storage, copying, transfer and display can be executed by a display permit key, and storage, copying, transfer, display and edit can be executed by a edit permit key.

In this system, storage, copying and transfer are placed at lower level than display because, even when storage, copying and transfer are executed on the data, which cannot be displayed, it is difficult and meaningless to utilize such data, and it is necessary to execute display in order to utilize the data.

This hierarchical arrangement is best suited to a system, in which encrypted data are supplied and are utilized using a permit key.

The permit key is usually offered to the user on pay basis. Therefore, except the case where it is allowed to utilize the data limitlessly, the number of use times of the permit key is limited to one time or several times if it is necessary to limit the number of use times.

Because the data can be used if there is a permit key, it is possible to use the data beyond the range of permission if the permit key is duplicated or falsified. To prevent this, the permit key is encrypted.

The use of data includes storage, display, copying, edit, transfer, etc. thereof, which are necessary to be allowed or prohibited.

In, case it is necessary to limit the number of use times or to limit forms of use, it is desirable to display a message for such purpose.

In case the information on copyright is falsified, the data supplier or the user may undergo damage, and this must be prevented.

To ensure completeness on copyright control, information on original copyright and information for secondary and tertiary copyright on edition of data are given to the data.

The above copyright control is executed by the copyright control program.

In conventional type database sysem, the data itself is offered in completely defenseless state. Therefore, the copyright control can be executed only when data is taken out from the database. In the subsequent copyright control, there is no other way but to rely on conscience of the users and to take necessary measures when the data are utilized beyond the permission range of use.

For this reason, as described in the prior patent application, i.e. GB 2 304 012 A, the data supplied from the database are left in encrypted state, and storage is executed under this condition. In addition, copying and transfer are also executed in encrypted state. And decrypting is performed only in display and edit, and these are controlled by the copyright control program.

In so doing, it is impossible to use the data beyond the permitted range.

In this case, the copyright control porgam may be integrated with the data or may be encrypted.

Because the copyright control program is encrypted and the permit key decrypts the copyright control program and because the copyright control program decrypts and encrypts the data, the data are encrypted twofold.

In this case, if a key unique to the data is added to the copyright control program to encrypt the data, it is impossible to decrypt the data in case the copyright control program is separated.

In this copyright control program, in case the data are stored, copied or transferred even within the permitted range, and if these are executed after the data and the copyright program have been encrypted, it is impossible to use the data in inadequate manner.

In case an operator inadequately uses a computer program and, as a result, the computer does not respond any more or computer operation is stopped, error message is displayed so that the operator may understand the cause. Similarly, if a user of the database erroneously uses beyond the permitted range of the permit key and, as a result, the computer does not respond any more or operation is stopped, the user cannot understand the cause.

In such case, a copyright control message is displayed just as an error message is displayed by the copyright control program.

The display of the copyright control message as described above also fulfills the function of warning in case the user intentionally uses the data beyond the range of use of the permit key.

In general, various programs are incorporated in ROM in side the equipment which the user uses, or the programs are supplied from software. In case the programs are incorporated in ROM, there is no possibility that the programs are changed, but the equipment to be used is limited to those, in which the ROM is incorporated. On the other hand, in case the programs are supplied from software, there is no limitation if the programs are transferred, but there is a possibility that the programs may be altered.

The database is utilized by various users using various types of devices. Therefore, in case the programs to control the copyright are supplied as software, it is necessary to cope with various types of devices, and there must not be the possibility to change the program.

Therefore, to prevent such trouble, the copyright control program should be encrypted.

In this case, as a matter of fact, it is necessary to modify the program according to the device, which the user uses. In such case, a program to translate the copyright control program is provided in communication software of the device which the user uses, and the copyright control progam is translated by the translation program of the copyright control program so that it suits the device.

Even when the permit key itself for using the database as described above may be more complicated by encryption, data size of several tens of bites is sufficient at the most.

Therefore, the time required for transmitting the permit key is far shorter than one second. In other words, even when charged public telephone line is used and other information is transmitted together with the permit key, the increase of cost is negligible.

Therefore, when transmitting the permit key as shown in Fig. 3B utilizing surplus time, the copyright control program can be transmitted.

The copyright control program can be supplied together with the permit key and also together with the data as shown in Fig. 3C.

In this case, the copyright control program is supplied together with the data, and the entire data utilization is placed under control of the copyright control program. For example, it is set in such manner that the data supplied in encrypted state cannot be decrypted unless the copyright program supplied with it is used, and in case there is no such copyright control program, the data cannot be used.

In so doing, the control of copyright is further reinforced.

Further, if the copyright control program is integrally united with the data, copyright control is further reinforced.

The following are some examples of the copyright control message:
"Need a display permit key."
"Need a storage permit key."
"Need a copying permit key."
"Need an edit permit key."
"Need a transfer permit key. "
Some other examples are:
"Display unavailable."
"Storage unavailabie.
"Copy unavailable. "
"Edit unavailable. "
"Transfer unavailable. "

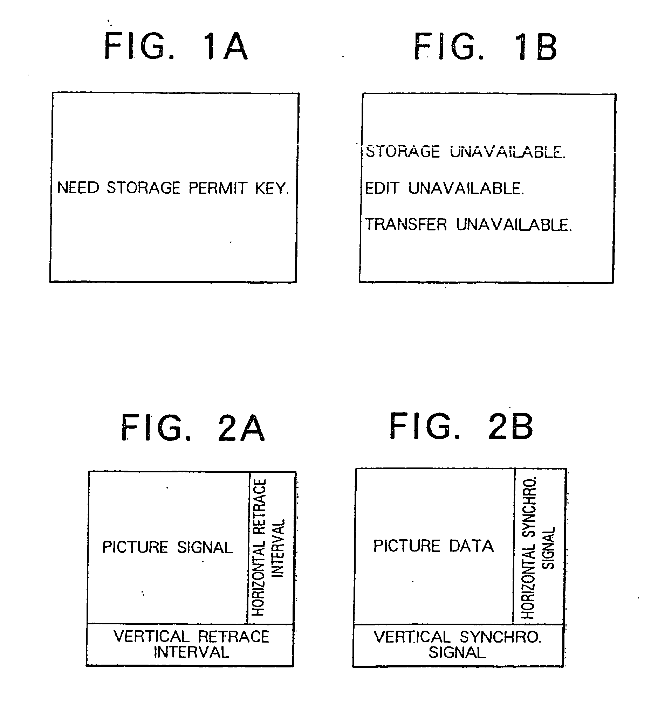

These copyright control messages are displayed alone as shown in Fig. 1A or in combination as shown in Fig. 1B.

Next, description will be given on supply of the copyright control message.

To display the copyright control message, the message must be stored in memory of the device, which the user uses. The memory in the device is classified to ROM and RAM.

The method to store in ROM is a reliable method, but there is a limitation to the device to be used because the user must use the ROM, where the copyright control messages are stored.

As the methods to store in RAM, there are a method to supply together with the permit key, a method to supply together with the copyright control program, and a method to supply together with the data. It is needless to say that, when the permit key and the copyright control program are supplied at the same time, the copyright control message can be supplied at the same time.

The copyright control message is not effective unless an adequate one is displayed. For this reason, the copyright control message cannot play its original role when the message is changed in such manner that no substantial content is displayed, or further, its content is null to be displayed. To prevent such trouble, the message is encrypted.

The display of the copyright control message is executed by the copyright control program. The modes of display are as follows: when it is tried to perform an operation with no adequate key available, a corresponding message is displayed; all messages corresponding to operation, available for the current permit key, are displayed, if it is tried to perform an oreration without available permit key.

The copyright control message is supplied together with the permit key as shown in Fig. 3D or together with the data as shown in Fig. 3E.

The copyright control message is transmitted by transmitting all messages or only the necessary messages required. In the former case, the quantity of information is plenty, but security is high. In the latter case, the quantity of information is relatively few, but security is low.

It is desirable that the copyright control message cannot be separated from the data just as in the case of the copyright control program, by the means for integrating it with copyright control program.

To display the copyright on printed matter, the name of the author and the date are used. The copyright of the database is displayed by entering information such as the name of the author and the date.

As described above, edit and up-load of edited data are included in the use of the data in the database. Specifically, the presence of secondary data, which is edited from the data, i. e. a work of authorship, is recognized. To ensure the copyright of the data in this context, it is necessary to store the information on original authorship and secondary authorship together with the data.

For this purpose, in case use of the data other than down-load and display of the data is executed, copyright information including the information on the operator is stored together with the data as history in addition to the copyright information up to that moment.

In this case, it is set in such manner that only the person who controls the database can put the original author ship to database as primary data, and all data handled by other than the person in charge, of database control are as secondary data, and the control of history can be further reinforced.

When the copyright information is separated from the data, which is a work of authorship, it becomes extremely difficult to recognize the copyright. Thus, it is necessary to set that the copyright information cannot be separated from the data.

To disable the copyright information to separate from the data, there are a method to integrate the data with the copyright information or a method to make the data not utilizable unless copyright information is available, just as in the case of the copyright control program or the case of the copyright control message as described above.

First, description will be given on the method to integrate the data with the copyright information.

The data handled by computer comprises a file header indicating data name and size and a file body, which is main body of the data. Therefore, to integrate the data with the copyright information there are methods to integrate the copyright information with the file header, to integrate the copyright information with the file body, and to take other means for the purpose.

Among these methods, the method to integrate the copyright information with file header is available even without file header in case of character information expressed by character code. Thus, it is a simple method but not very reliable. Also, because the capacity of the file header is not so high, it is not sufficient in case there are a large amount of copyright information.

Digital picture data and digital sound data are grouped, and a header is added to this group. The copyright information can be integrated to this group header.

However, there is a problem of header capacity similar to the case of file header in this case.

As the method to integrate the copyright information with the file body, one way is to add it for each edited data, and another is to add it all together.

In case of adding the copyright information for each edited data, the copyright information is added to each data, which is edited by cut and paste procedure. This case is not only complicated but disadvantageous in that the entire file data becomes too big.

If the picture data is indicated the copyright of original authorship, it is easy to confirm to which data corresponds, and thus, it is not always necessary to add the copyright information to each minimum unit of the edited data.

It is also possible to write the copyright information into the copyright program. In this method, it is difficult to manipulate the copyright information if it is written in the copyright control program integrated with the data asalready described.

In case the data is a picture signal, it is necessary to have synchronization signal data in order to define scanning line, field and frame. This synchronization signal has high redundancy and is generally turned to code of variable-length. Thus, the copyright information can be mixed with the code of variable-length. The number of scanning lines is 480 in case of VGA standards. By utilizing this, a considerable quantity of information can be mixed in it.

In case the picture data is animated picture, it is possible to write sufficient quantity of copyright information in this method. However, if the picture data is a still picture edited by cut and paste procedure, there may be no space enough to add the copyright control information.

Fig. 2A and Fig. 2B each represents a structure of a signal of analog type television and that of a signal of digital type television. Fig. 2A represents the case of analog television, and Fig. 2B shows the case of digital television.

The signal other than picture data such as multiplex teletext signal in analog television is inserted by utilizing vertical retrace interval, and horizontal retrace interval is not utilized.

In contrast, in digital television, it is possible for copyright control program or other multiplex teletext signal to enter into horizontal scanning data or into vertical scanning data.

As a method to integrate the copyright information with data, one way is to write the copyright information into the data itself, and another is to write it into control code.

As the data used in computer, there is control code for controlling communication system or computer system in addition to the data to be displayed on screen or used for some operation, and this control code cannot be seen by the user. Therefore, if the copyright information is written into the control code, the copyright information thus written does not cause trouble in the use by the user.

It is also possible to enter into the file of the computer using the technique of computer virus without affecting the operation itself.

The copyright information may be supplied together with the permit key as shown in Fig. 3F or may be supplied together with data as shown in Fig. 3G.

Attention has been focused in recent years on digital signature. Using a private key which only the person concerned knows and a public key which other persons also know, digital signature is prepared from the private key and from the data of file size based on the document. If the document is changed, the change can be confirmed by the private key, and the content of the document can be seen at any time by the other persons using the public key. Thus, this offers very high security.

The data of computer can be changed without leaving any trace. For this reason, if the copyright of the data is infringed without being noticed, this may not be known to the author, or a user, who uses the data wi thout knowing that the content of the data has been changed, may suffer some damage.

To prevent such trouble, digital signature is attached to the data, which may be changed, and the damage to the copyright owner or the user can be avoided.

The "permit key" , "copyright control program " , "copyright control message " , and "copyright information "can be combined in any way as necessary to actualize the method for controlling database copyright.

Also, it is possible to design in such manner that only a part of the data of the copyright control program, the copyright control message or the copyright information is supplied together with the permit key as shown in Fig. 3H, 3I and 3J and that the other part is supplied together with the data so that the part supplied as the permit key and the part supplied together with the data are combined together and the function as a complete permit key serves after they have been combined together.

In so doing, it is possible to give the function of the permit key to the copyright program and copyright control message, and higher security is ensured.
Additional embodiments of the invention are mentioned as follows:
1. A method for data copyright control for controlling copyright of digital data encrypted and supplied from a database to a user, whereby:
   a utilization permit key including a decryption key for said digital data is supplied from a key control center to said user;
   said utilization permit key is a display permit key for displaying said digital data, an edit permit key for editing said digital data, a storage permit key for storing said digital data, a copy permit key for copying said digital data and/or a transfer utilization permit key for transferring said digital data; and
   said user decrypts said digital data using said permit key and displays, edits, stores, copies or transfers said digital data.
2. A method for data copyright control according to 1, wherein digital signature is given to said digital data.
3. A method for data copyright control according to 1 or 2, wherein at least one of a copyright control program for controlling copyright of said digital data, a copyright information for copyright of said digital data or a copyright control message for use of said digital data on copyright is used in addition to each of said permit keys.
4. A method for data copyright control according to 3, wherein said copyright information is stored, copied or transferred together with said digital data in case said digital data is stored, copied or transferred.
5. A method for data copyright control according to 3 or 4, wherein history information for edit, copy or transfer of said digital data is added to said copyright information in case said digital data is edited, copies or transferred.
6. A method for data copyright control according to one of 1, 2, 3, 4 or 5, wherein said display permit key, said edit permit key, said storage permit key, said copy permit key and/or said transfer permit key are encrypted.
7. A method for data copyright control according to 6, wherein said encrypted data is decrypted by said copyright control program.
8. A method for data copyright control according to one of 3, 4, 5, 6 or 7, wherein said copyright control program is encoded.
9. A method for data copyright control according to one of 3, 4, 5, 6, 7 or 8, wherein said copyright control program, said copyright information or said copyright control message is supplied together with said utilization permit key.
10. A method for data copyright control according to one of 3, 4, 5, 6, 7 or 8, wherein said copyright control program, said copyright information or said copyright control message is supplied together with said encrypted data from the database; and
   said utilization permit key is supplied from said key control center.
11. A method for data copyright control according to one of 3, 4, 5, 6, 7 or 8, wherein a part of said copyright control program, said copyright information or said copyright control message is supplied together with an encrypted data from the database; and
   another part of said copyright control program, said copyright information or said copyright control message is supplied together with said permit key from said key control center.
12. A method for data copyright control for controlling copyright of digital data encrypted and supplied from a database to a user, whereby:
   a permit key including a decoding key for said digital data is supplied from a key control center to said user;
   said permit key is a display permit key for displaying said digital data, an edit permit key for editing said digital data, a storage permit key for storing said digital data, a copy permit key for copying said digital data and/or a transfer permit key for transferring said digital data; and
   said user displays, edits, stores, copies or transfers said digital data using said permit key;
   said digital data encrypted is decrypted when said digital data is displayed and edited; and
   said digital data is encrypted again when said digital data is stored, copies or transferred.
13. A method for data copyright control according to 12, wherein digital signature is given to said digital data.
14. A method for data copyright control according to 12 or 13, wherein at least one of a copyright control program for controlling copyright of said digital data, copyright information for copyright of said digital data or a copyright control message for using said digital data on copyright is used in addition to each of said permit keys.
15. A method for data copyright control according to 14, wherein said copyright information is stored, copied or transferred in case said digital data is stored, copied or transferred.
16. A method for data copyright control according to 14 or 15, wherein history information for edit, copy or transfer of said digital data is added to said copyright information in case said digital data is edited, copied or transferred.
17. A method for data copyright control according to one of 12, 13, 14, 15 or 16, wherein said display permit key, said edit permit key, said storage permit key, said copy permit key and/or said transfer permit key are encrypted.
18. A method for data copyright control according to 17, wherein encryption of said digital data is decrypted by said copyright control program.
19. A method for data copyright control according to one of 14, 15, 16, 17 or 18, wherein said copyright control program is encrypted.
20. A method for data copyright control according to one of 14, 15, 16, 17, 18 or 19, wherein said copyright control program, said copyright information or said copyright control message is supplied together with said permit key.
21. A method for data copyright control according to one of 14, 15, 16, 17, 18 or 19, wherein said copyright control program, said copyright information or said copyright control message is supplied together with said digital data encrypted from the database; and
   said permit key is supplied from said key control center.
22. A method for data copyright control according to one of 14, 15, 16, 17, 18 or 19, wherein a part of said copyright control program, said copyright information or said copyright control message is supplied together with the digital data encrypted from the database; and
   another part of said copyright control program, said copyright information or said copyright control message is supplied together with said permit key from said key control center.

## Claims

1. A method for controlling copyright of digital data, comprising:
a. encrypting digital data to produce encrypted data;
b. supplying the encrypted digital data to a user;
c. transmitting a utilization permit key to the user, the utilization permit key allowing at least one of display, storage, copy, edit, and transfer of the encrypted digital data; **characterized by**
d. supplying a copyright control program with the permit key, wherein the copyright control program watches and controls utilization of said digital data.

2. The method for controlling copyright of digital data of claim 1, wherein the utilization permit key is hierarchical; and the utilization key at an upper hierarchy level includes a function of said utilization key at a lower hierarchy level.

3. The method for controlling copyright of digital data of claim 2, wherein the utilization permit key at the highest hierarchy level permits transfer.

4. The method for controlling copyright of digital data of claim 2, wherein an edit permit key permits display, storage, copy, and edit.

## Patentansprüche

1. Verfahren zum Überwachen eines Copyrights von digitalen Daten, aufweisend:
a. Verschlüsseln von digitalen Daten, um verschlüsselte Daten zu erzeugen;
b. Liefern der verschlüsselten digitalen Daten an einen Anwender;
c. Übertragen eines Verwendungserlaubnisschlüssels an den Anwender, wobei der Verwendungserlaubnisschlüssel Anzeigen, Speichern, Kopieren, Editieren und / oder Transfer der verschlüsselten digitalen Daten erlaubt; **gekennzeichnet durch**
d. Liefern eines Copyright-Überwachungsprogramms mit dem Erlaubnisschlüssel, wobei das Copyright-Überwachungsprogramm den Gebrauch der digitalen Daten beobachtet und überwacht.

2. Verfahren zum Überwachen eines Copyrights von digitalen Daten nach Anspruch 1, wobei der Verwendungserlaubnisschlüssel hierarchisch ist; und wobei der Verwendungsschlüssel auf einer höheren Hierarchieebene eine Funktion des Verwendungsschlüssels auf einer niedrigeren Hierarchieebene umfasst.

3. Verfahren zum Überwachen eines Copyrights von digitalen Daten nach Anspruch 2, wobei der Verwendungserlaubnisschlüssel auf der höchsten Hierarchieebene Transfer erlaubt.

4. Verfahren zum Überwachen eines Copyrights von digitalen Daten nach Anspruch 2, wobei ein Editiererlaubnisschlüssel Anzeigen, Speichern, Kopieren und Editieren erlaubt.

## Revendications

1. Un procédé pour contrôler les droits d'auteur de données numériques, comprenant :
a. le cryptage des données numériques pour produire des données cryptées ;
b. la fourniture des données numériques cryptées à un utilisateur ;
c. l'émission d'une clef de permission d'utilisation à l'utilisateur, la clef de permission d'utilisation autorisant au moins l'un parmi : affichage, mémorisation, recopie, modification et transfert des données numériques cryptées ; **caractérisé par**
d. la fourniture d'un programme de contrôle des droits d'auteur avec la clef de permission, où le programme de contrôle des droits d'auteur surveille et contrôle l'utilisation desdites données numériques.

2. Le procédé de contrôle des droits d'auteur de données numériques de la revendication 1, dans lequel la clef de permission d'utilisation est hiérarchique ; et la clef d'utilisation à un niveau hiérarchique supérieur inclut une fonction de ladite clef d'utilisation à un niveau hiérarchique inférieur.

3. Le procédé de contrôle des droits d'auteur de données numériques de la revendication 2, dans lequel la clef de permission d'utilisation au niveau hiérarchique le plus élevé permet le transfert.

4. Le procédé de contrôle des droits d'auteur de données numériques de la revendication 2, dans lequel une clef de permission de modification permet l'affichage, la mémorisation, la recopie et la modification.
